(19) Europäisches Patentamt

European Patent Office

Office européen des brevets

(11) Veröffentlichungsnummer: **0 153 602 B1**

(12) **EUROPÄISCHE PATENTSCHRIFT**

(45) Veröffentlichungstag der Patentschrift: **01.04.92**

(21) Anmeldenummer: **85100976.1**

(22) Anmeldetag: **31.01.85**

(51) Int. Cl.⁵: **G11B 15/02**, H04N 17/06, G11B 27/34

(54) Befehlseingabe bei einem mikroprozessorgesteuerten Videorecorder.

(30) Priorität: **25.02.84 DE 3406890**
**28.04.84 DE 3415886**

(43) Veröffentlichungstag der Anmeldung:
**04.09.85 Patentblatt 85/36**

(45) Bekanntmachung des Hinweises auf die
Patenterteilung:
**01.04.92 Patentblatt 92/14**

(84) Benannte Vertragsstaaten:
**DE FR GB IT**

(56) Entgegenhaltungen:
**EP-A- 0 057 914    EP-A- 0 081 958**
**EP-A- 0 103 707    DE-A- 2 607 526**
**DE-A- 3 029 689    FR-A- 2 401 485**

**PATENT ABSTRACTS OF JAPAN, Band 7, Nr.
260 (P-237)[1405], 18. November 1983; & JP-
A-58 141 456 (FUJITSU TEN K.K.) 22-08-1983**

**GRUNDIG TECHNISCHE INFORMATIONEN,
Band 80, Nr. 2, 1983, Seiten 55-66, Regensburg, DE; W. KORNHAAS: "Eine neue Videorecordergeneration im System Video 2000
von Grundig"**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Schuelein, Reinhard, Dipl.-Ing. (FH)
Humboldtstrasse 6
W-8502 Zirndorf(DE)**
Erfinder: **Raab, Frank
Schildgasse 29
W-8500 Nürnberg(DE)**

GRUNDIG TECHNISCHE INFORMATIONEN, Band 80, Nr. 2, 1983, Seiten 66-74, Regensburg, DE; F. MEIERHÖFFER: "Die Bedieneinheit und die Ablaufsteuerung der neuen Videorecorder von Grundig"

PATENT ABSTRACTS OF JAPAN, Band 8, Nr. 48, (P-258)[1485], 3. März 1984; JP-A-58 199 459 (CLARION K.K.) 19-11-1983

S.M.P.T.E. JOURNAL, Band 93, Nr. 2, Februar 1984, Seiten 149-154, Scarsdale, New York, US; M. GLEN ROSE et al.: "Diagnostics for a microprocessor-based videotape recorder"

**Beschreibung**

Die vorliegende Erfindung betrifft ein Verfahren zur Eingabe von Befehlen bei einem mikroprozessorgesteuerten Videorecorder mit den im Oberbegriff des Anspruchs 1 angegebenen Merkmalen.

Alle Bedienelemente für den normalen Betriebsablauf eines Videorecorders sind gewöhnlich auf dem Bedienfeld oder der zugehörigen Fernbedienung durch Beschriftung oder Symbole gekennzeichnet. Zu den durch die Bedienelemente auszulösenden normalen Betriebsfunktionen zählen beispielsweise Start, Stop, schneller Vorlauf, schneller Rücklauf, Pause, Suchlauf u.a. Allgemein sind mit diesen normalen Betriebsfunktionen diejenigen gemeint, die zur Steuerung der Aufnahme- und Wiedergabevorgänge durch den Benutzer aktiviert werden müssen.

Das Bedienfeld bekannter Videorecorder moderner Bauart (GRUNDIG Technische Informationen, Nr. 2/1983 vom Juni 1983, Seiten 55 bis 87) ist einerseits mit verschiedenen Tasten ausgerüstet, die den erwähnten normalen Betriebsfunktionen zugeordnet sind. Andererseits ist aber auch eine Zehnertastatur vorgesehen, mit der die Abspeicherung und der Abruf bestimmter Fernsehsender sowie die Einstellung und Abspeicherung von Datum und Uhrzeit möglich ist. Für Anzeige oder Rückmeldung der mit Hilfe der Bedienelemente und der Zehnertastatur eingegebenen Daten dient ein Anzeigedisplay mit alphanumerischen Anzeigeelementen. Das Anzeigedisplay dient außerdem noch dazu, einige schwerwiegende Betriebsstörungen, wie etwa Kopfrad-Stillstand, Band-Stillstand, usw. zu melden.

Aus der DE-PS 28 37 025 ist es bereits bekannt, über eine Zahlentastatur in ein mikroprozessorgesteuertes Magnetbandgerät Zahlenwerte einzugeben, die dem Bandstand und der Zeit zugeordnet sind, wobei der Bandtransport nach Maßgabe dieser Zahlenwerte gesteuert wird.

Ferner ist aus der DE-AS 26 07 526 ein elektronisches Permutationsschloß bekannt, bei dem die Betätigung von Tastschaltern in vorbestimmter Reihenfolge zum Entriegeln und die Betätigung eines besonderen Tastschalters zum Verriegeln eines Schlosses vorgesehen sind.

Weiterhin ist aus der DE-A-30 29 689 ein programmierbarer Audio- oder Videorecorder bekannt, welcher für eine aus mehreren Befehlen bestehende Befehlsfolge vorprogrammiert werden kann, beispielsweise eine repetierende Wiedergabe. Ferner ist dieser Entgegenhaltung entnehmbar, daß es nachteilig ist, wenn die vorprogrammierte Befehlsfolge vor der nächsten Inbetriebnahme des Gerätes manuell wieder rückgängig gemacht werden muß.

Aus der EP-A-0 057 914 ist ein mikroprozessorgesteuerter Videorecorder bekannt, welcher eine Schaltuhr zur Programmierung der Ein- und/oder Ausschaltzeit aufweist.

Ferner kann die Zehnertastatur des Videorecorders zur Eingabe von Codezahlen benutzt werden, wodurch Sonderfunktionen ausgelöst werden, die nicht zum normalen Betriebsablauf des Videorecorders gehören, wie beispielsweise aus der DE-OS 32 28 354 bekannt ist.

Ein Problem bei der Eingabe von Codezahlen entsteht dann, wenn der Benutzer nach der Eingabe der Codezahl und damit der Auslösung einer Sonderfunktion die Codezahl vergißt und nicht mehr in der Lage ist, die Sonderfunktion des Videorecorders zu beenden, d.h. den normalen Betriebszustand wieder herbeizuführen.

Deshalb besteht die Aufgabe der vorliegenden Erfindung darin, ein Verfahren zu schaffen, das es ermöglicht, auf besonders einfache Weise den normalen Betriebszustand wieder herzustellen, auch wenn die eingegebene Codezahl nicht mehr zur Verfügung steht.

Diese Aufgabe wird nach der vorliegenden Erfindung durch die kennzeichnenden Merkmale des Anspruchs 1 gelöst.

Die Vorteile der Erfindung liegen darin, daß die durch die Eingabe der Codezahl ausgelöste Sonderfunktion bei Erreichen der eingegebenen Zeit bzw. des eingegebenen Datums beendet wird, so daß auch dann, wenn dem Benutzer die zur Beendigung der Sonderfunktion nötige Codezahl nicht mehr zur Verfügung steht, der Videorecorder wieder in seinen normalen Betriebszustand gebracht werden kann.

Im folgenden wird die Erfindung anhand von Ausführungsbeispielen näher erläutert.

Als Sonderfunktion im Sinne der vorliegenden Erfindung ist beispielsweise zu verstehen, daß die Inbetriebnahme des Videorecorders erst nach Eingabe einer bestimmten Codezahl über die Zehnertastatur möglich ist, um eine unbefugte Benutzung des Geräts zu verhindern, oder daß bestimmte Betriebsfunktionen, wie etwa Aufnahme oder Eingabe neuer Empfangsfrequenzen in den Stationsspeicher verriegelt werden und erst nach Eingabe einer Codezahl aktiviert werden können. Ferner kann durch die Eingabe einer Codezahl die repetierende Wiedergabe bestimmter Aufzeichnungsabschnitte, die in bekannter leise magnetisch markiert sind, ausgelöst werden.

Ferner kann die Codezahl in vorteilhafter Weise für Servicearbeiten genutzt werden. Dabei wird an bestimmte, im Gerät leicht zugängliche Meßpunkte, je nach eingegebener Codezahl, ein geräteinternes Signal angelegt, das für die Beurteilung von Funktionsfehlern und Fehleinstellungen von Bedeutung ist. Der Servicetechniker kann unter Nutzung des erfindungsgemäßen Verfahrens beispielsweise an einen leicht zugänglichen Meßpunkt ein Oszilloskop anschließen und dann durch Eingabe verschiedener Codezahlen, die er einer Service-Tabelle entnimmt, unterschiedliche Signale, die für die einwandfreie Funktion des Videorecorders wichtig sind, oszillographisch darstellen, ohne daß der Eingang des Oszilloskops an einen anderen Meßpunkt angeschlossen werden muß. Dadurch ergeben sich besonders bei kompakten Innenaufbau des Videorecorders und schwerer Zugänglichkeit der verschiedenen Baugruppen erhebliche Zeit- und Kosteneinsparungen bei Servicearbeiten.

Eine weitere Sonderfunktion ergibt sich bei der erstmaligen Abstimmung des für die Videorecorderwiedergabe vorgesehenen Fernsehempfängers. Das Ausgangssignal des Videorecorders wird gewöhnlich mit Hilfe eines eingebauten Modulators einen bestimmten Fernsehkanal zugeordnet. Auf diesen voreingestellten Fernsehkanal des Modulators im Videorecorder muß bei der ersten Inbetriebnahme die Abstimmeinrichtung des Fernsehempfängers eingestellt werden, derart, daß bei Betätigung einer bestimmten Kanaltaste am Fernsehempfänger das Ausgangssignal des Videorecorders in bester Bild- und Tonqualität wiedergegeben wird. Hierzu wird durch Betätigung besonderer Schalter oder Tasten ein im Videorecorder erzeugtes Testsignal vorübergehend auf den Modulator geschaltet. Auch dieser Schaltvorgang ist als Sonderfunktion zu verstehen und kann durch Eingabe einer Codezahl ausgelöst werden, so daß besondere Tasten oder Schalter eingespart werden können.

Weiterhin können die durch Eingabe der Codezahlen ausgelosten Sonderfunktionen zur Kontrolle auf dem Anzeigedisplay des Videorecorders alphanumerisch oder symbolisch angezeigt werden.

Darüber hinaus kann die eingegebene Codezahl auch die Auslösung bestimmter Testroutinen bewirken, wobei das Ergebnis der einzelnen Testschritte auf dem Anzeigedisplay des Videorecorders dargestellt wird. Dies kann beispielsweise so geschehen, daß bei Abweichung eines Meßwertes vom Sollwert ein bestimmter Buchstabe, ein Wort oder ein Symbol, das zur Verbesserung der Wahrnehmbarkeit auch blinken kann, auf dem Anzeigefeld des Videorecorders erscheint.

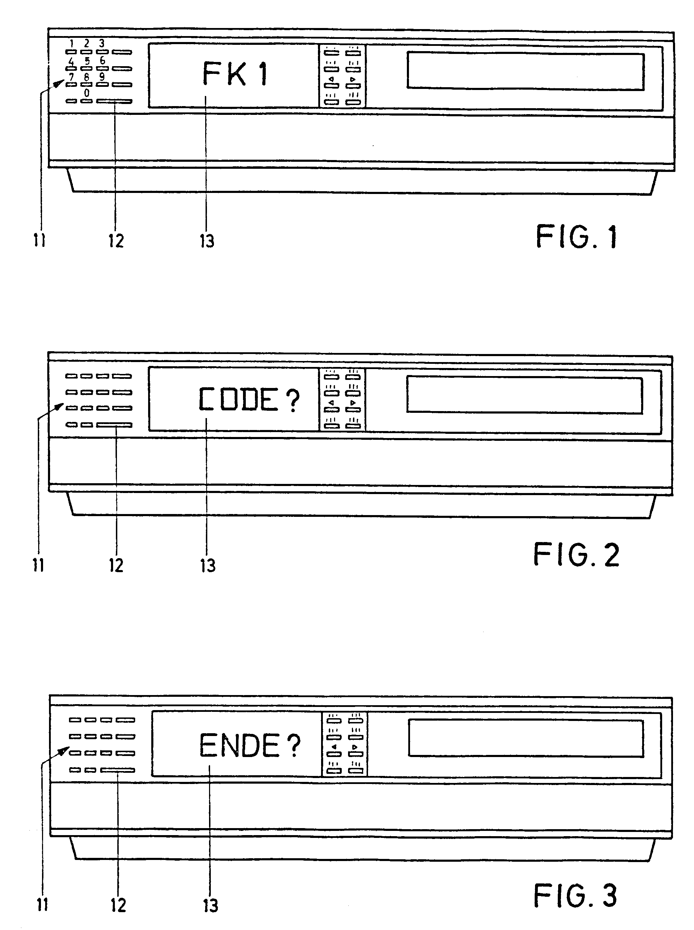

Aus der Figur 1 wird die Anordnung der wesentlichen Bedien- und Anzeigeelemente eines Videorecorders deutlich. Die Zehnertastatur 11 dient zur Eingabe der Codezahlen, die Sondertaste 12 dient zur Auslösung der Verarbeitung der Codezahl durch den eingebauten Mikroprozessor, so daß die gewünschte Sonderfunktion aktiviert wird. Auf dem Anzeigedisplay 13 wird die Sonderfunktion durch alphanumerische Zeichen, Begriffe oder Symbole in abgekürzter, aber verständlicher Form dargestellt. Bei dem Beispiel nach der Figur 1 wäre beispielsweise mit FK 1 gemeint, daß im Rahmen einer durch die Codezahl angewählten Testroutine ein Fehler am Videokopf 1 festgestellt wurde.

Im folgenden wird ein Ausführungsbeispiel für die Beendigung der durch die Codezahl ausgelösten Sonderfunktion mit Hilfe der Fig. 2 und 3 näher erläutert. Durch Betätigung der Sondertaste 12 wird der Recorder für die Eingabe der Codezahl vorbereitet. Beispielsweise erscheint nach Betätigung der Taste 12 auf dem Anzeigedisplay 13 der Schriftzug "CODE?" (siehe Fig. 2). Nach der Eingabe der für die gewünschte Sonderfunktion charakteristischen Codezahl mit Hilfe der Zehnertastatur 11 erscheint auf dem Anzeigedisplay 13 der Schriftzug "ENDE?" (siehe Fig. 3). Damit wird dem Benutzer angezeigt, daß der Recorder die Eingabe eines Zeitpunktes bzw. Datums erwartet, an dem die durch die eingegebene Codezahl definierte Sonderfunktion (spätestens) beendet werden soll. Ist auch die Eingabe des Zeitpunktes vorgenommen, kann beispielsweise durch erneute Betätigung der Sondertaste 12 die Verarbeitung der eingegebenen Codezahl durch den eingebauten Mikrocomputer ausgelöst und damit die gewünschte Sonderfunktion aktiviert werden.

Die Beendigung der Sonderfunktion, d. h. beispielsweise die Entriegelung des Videorecorders oder die Beendigung der repetierenden Wiedergabe, usw., ist auf zwei Wegen möglich: entweder (vorab) durch erneute Eingabe einer Codezahl, die die Löschung der eingegebenen Sonderfunktion bewirkt, oder (automatisch) gemäß der vorliegenden Erfindung nach Ablauf der eingegebenen Zeit bzw. bei Erreichen des eingegebenen Datums.

Die Zeit bzw. das Datum kann entweder vom Benutzer über die Zehnertastatur des Videorecorders oder bereits vom Gerätehersteller als Festwert eingegeben werden.

**Patentansprüche**

1.  Verfahren zur Eingabe von Befehlen bei einem mikroprozessorgesteuerten Videorecorder, dessen Bedienteil Funktionstasten und eine Zehnertastatur aufweist, wobei mittels der Funktionstasten die normalen Betriebsfunktionen des Videorecorders auslösbar sind und wobei die Zehnertastatur für die Eingabe von weiteren Betriebsfunktionen und zusätzlich zur Eingabe von Codezahlen benutzt wird, wodurch Sonderfunktionen aktiviert werden, die nicht zu den mittels der Funktionstasten auslösbaren normalen Betriebsfunktionen des Videorecorders gehören, und der außerdem mit einem alphanumerischen Anzeigedisplay versehen ist,

    **dadurch gekennzeichnet,** daß zusätzlich zur eingegebenen Codezahl ein Zeitpunkt eingegeben wird, was bewirkt, daß bei Erreichen das eingegebenen Zeitpunktes die durch die Codezahl aktivierte Sonderfunktion automatisch beendet wird.

2. Verfahren nach Anspruch 1, **dadurch gekennzeichnet,** daß der Zeitpunkt, bei dessen Erreichen die durch die Codezahl aktivierte Sonderfunktion beendet wird, bereits vom Gerätehersteller als Festwert eingegeben wird.

3. Verfahren nach Anspruch 1, **dadurch gekennzeichnet,** daß der Zeitpunkt, bei dessen Erreichen die durch die Codezahl aktivierte Sonderfunktion beendet wird, vom Benutzer über die Zehnertastatur des Recorders eingegeben wird.

4. Verfahren nach einem der vorhergehenden Ansprüche, **dadurch gekennzeichnet,** daß die Verarbeitung der Codezahl und des Zeitpunktes durch den Mikroprozessor erfolgt und durch die Betätigung einer Sondertaste ausgelöst werden.

5. Verfahren, bei dem eine bestimmte Codezahl ausgewählte Betriebsfunktionen des Videorecorders verriegelt, nach einem der vorhergehenden Ansprüche, **dadurch gekennzeichnet,** daß die verriegelten Betriebsfunktionen bei Erreichen des eingegebenen Zeitpunktes automatisch entriegelt werden.

6. Verfahren nach einem der Ansprüche 1 bis 4, **dadurch gekennzeichnet,** daß eine bestimmte Codezahl die repetierende Wiedergabe von Aufzeichnungsabschnitten aktiviert, die vorzugsweise magnetisch markiert sind.

7. Verfahren nach einem der Ansprüche 1 bis 4, **dadurch gekennzeichnet,** daß eine bestimmte Codezahl die Anschaltung eines oder mehrerer Service-Meßpunkte im Videorecorder an Signale bewirkt, die für die Beurteilung von Funktionsfehlern und/oder Fehleinstellungen des Abgleichs von Bedeutung sind.

8. Verfahren nach einem der Ansprüche 1 bis 4, **dadurch gekennzeichnet,** daß eine bestimmte Codezahl die Anschaltung eines Testsignals zur Abstimmung des Fernsehempfängers auf den Ausgang des Videorecorders bewirkt, wobei das Testsignal ggf. über einen Modulatorbaustein geleitet wird, der auf einen bestimmten Fernsehkanal eingestellt ist.

9. Verfahren nach einem der Ansprüche 1 bis 4, **dadurch gekennzeichnet,** daß die eingegebene Codezahl Testroutinen und die Anzeige von Funktionsfehlern des Videorecorders auf dem Anzeigedisplay auslöst.

10. Verfahren nach einem der vorhergehenden Ansprüche, **dadurch gekennzeichnet,** daß die durch die eingegebene Codezahl ausgelöste Sonderfunktion auf dem Display angezeigt wird.

**Claims**

1. Method for inputting commands in a microprocessor-controlled video recorder, the operating section of which exhibits function keys and a numerical keypad, in which arrangement the function keys can be used for triggering the normal operating functions of the video recorder and the numerical keypad is used for inputting further operating functions and additionally for inputting code numbers by means of which special functions are activated which do not belong to the normal operating functions of the video recorder which can be triggered by means of the function keys, and which operating section is also provided with an alphanumeric display, characterised in that, in addition to the code number which has been input, a time is input which has the effect that the special function activated by the code number is automatically ended when the time which has been input is reached.

2. Method according to Claim 1, characterised in that the time at which the special function activated by the code number is ended is already input as fixed value by the manufacturer of the device.

3. Method according to Claim 1, characterised in that the time at which the special function activated by the code number is ended is input by the user via the numerical keypad of the recorder.

4. Method according to one of the preceding claims, characterised in that the code number and time are processed by the microprocessor and this processing is triggered by operating a special key.

5. Method in which a particular code number locks selected operating functions of the video recorder, according to one of the preceding claims, characterised in that the locked operating functions are automatically unlocked when the time which has been input is reached.

6. Method according to one of Claims 1 to 4, characterised in that a particular code number activates the repetitive reproduction of recording sections which are preferably magnetically marked.

7. Method according to one of Claims 1 to 4, characterised in that a particular code number causes one or several service test points in the video recorder to be connected to signals which are of significance for assessing function errors and/or misadjustments of the calibration.

8. Method according to one of Claims 1 to 4, characterised in that a particular code number causes a test signal for tuning the television receiver to be connected to the output of the video recorder, the test signal possibly being conducted via a modulator chip which is set to a particular television channel.

9. Method according to one of Claims 1 to 4, characterised in that the code number which has been input triggers test routines and the indication of function errors of the video recorder on the display.

10. Method according to one of the preceding claims, characterised in that the special function triggered by the code number which has been input is indicated on the display.

**Revendications**

1. Procédé pour introduire des instructions dans un magnétoscope commandé par un microprocesseur et dont la partie de commande comporte des touches de fonction et un clavier décimal, selon lequel les fonctions normales de service du magnétoscope peuvent être déclenchées au moyen des touches de fonction et le clavier décimal est utilisé pour l'introduction d'autres fonctions de service et en outre pour l'introduction de nombres de code, ce qui permet d'activer des fonctions spéciales qui ne sont pas associées aux fonctions normales de service du magnétoscope, qui peuvent être déclenchées au moyen des touches de fonction, le magnétoscope comportant en outre un dispositif d'affichage alphanumérique,

caractérisé en ce qu'on introduit un instant en plus du nombre de code introduit, ce qui a pour effet que, lorsque l'instant introduit est atteint, la fonction particulière activée par le nombre de code est arrêtée automatiquement.

2. Procédé selon la revendication 1, caractérisé en ce que l'instant, auquel la fonction particulière activée par le nombre de code est arrêtée, est déjà introduit en tant que valeur fixe par le fabricant de l'appareil.

3. Procédé selon la revendication 1, caractérisé en ce que l'instant, auquel la fonction particulière activée par le nombre de code est arrêtée, est introduit par l'utilisateur par l'intermédiaire du clavier décimal du magnétoscope.

4. Procédé selon l'une des revendications précédentes, caractérisé en ce que le traitement du nombre de code et de l'instant est exécuté par le microprocesseur et est déclenché par l'actionnement d'une touche particulière.

5. Procédé selon lequel un nombre de code déterminé verrouille des fonctions de service sélectionnées du magnétoscope, selon l'une des revendications précédentes, caractérisé en ce que les fonctions de service verrouillées sont libérées automatiquement lorsque l'instant introduit est atteint.

6. Procédé selon l'une des revendications 1 à 4, caractérisé en ce qu un nombre de code déterminé active la lecture répétée de sections d'enregistrement, qui sont marquées de préférence magnétiquement.

7. Procédé selon l'une des revendications 1 à 4, caractérisé en ce qu'un nombre de code déterminé provoque l'application, à un ou plusieurs points de mesure de dépannage dans le magnétoscope, de signaux qui sont importants pour l'évaluation de défauts de fonctionnement et/ou de réglages erronés de l'équilibrage.

8. Procédé selon l'une des revendications 1 à 4, caractérisé en ce qu'un nombre de code déterminé provoque l'envoi d'un signal de test servant à accorder le récepteur de télévision sur la sortie du magnétoscope, le signal de test étant envoyé éventuellement par l'intermédiaire d'un module formant modulateur, qui est réglé sur un canal de télévision déterminé.

9. Procédé selon l'une des revendications 1 à 4, caractérisé en ce que le nombre de code introduit déclenche des sous-programmes de test et l'affichage de défauts de fonctionnement, apparus dans le magnétoscope, sur le dispositif d'affichage.

10. Procédé selon l'une des revendications précédentes, caractérisé en ce que la fonction particulière déclenchée par le nombre de code introduit est affichée sur le dispositif d'affichage.

FK 1

FIG. 1

11    12    13

CODE?

FIG. 2

11    12    13

ENDE?

FIG. 3

11    12    13